# EUROPÄISCHE PATENTSCHRIFT

(11) **EP 2 012 947 B1**
(45) Veröffentlichungstag und Bekanntmachung des Hinweises auf die Patenterteilung: **21.09.2011**
(21) Anmeldenummer: 07728390.1
(22) Anmeldetag: 23.04.2007
(51) Int. Cl.: B21D 22/22

(54) **VERFAHREN UND VORRICHTUNG ZUR HERSTELLUNG VON RÜCKFEDERUNGSARMEN HALBSCHALEN**
METHOD AND DEVICE FOR PRODUCING LOW-SPRINGBACK HALF SHELLS
PROCEDE ET DISPOSITIF POUR PRODUIRE DES DEMI-COQUES A FAIBLE EFFET DE RESSORT

(30) Priorität: 26.04.2006 DE 102006020000
(43) Veröffentlichungstag der Anmeldung: 14.01.2009
(73) Patentinhaber: ThyssenKrupp Steel Europe AG, 47166 Duisburg (DE)
(72) Erfinder: FLEHMIG, Thomas, 40885 Ratingen (DE); HÖMIG, Lothar, 46562 Voerde (DE); SAVVAS, Konstantinos, 45481 Mülheim (DE)
(74) Vertreter: Cohausz & Florack
(86) Internationale Anmeldenummer: PCT/EP2007/053933
(87) Internationale Veröffentlichungsnummer: WO 2007/125051

(56) Entgegenhaltungen:
- EP-A- 1 593 558
- EP-A1- 0 906 804
- EP-A1- 0 919 304
- DE-A1- 3 218 923
- JP-A- 8 168 830
- JP-A- 60 137 527

## Beschreibung

Die Erfindung betrifft ein Verfahren zur Herstellung von rückfederungsarmen Halbschalen aus einem Metall, insbesondere Stahl oder einer Stahllegierung, bei welchem Platinen in mindestens einem Ziehgesenk gezogen werden, so dass die Platinen nach dem Tiefziehen an der tiefgezogenen Zarge Flanschbereiche aufweisen sowie eine Vorrichtung zur Herstellung von rückfederungsarmen Halbschalen. Daneben betrifft die Erfindung ein Verfahren zur Herstellung geschlossener Hohlprofile, insbesondere "modular Tubes", bei welchem mindestens zwei Halbschalen so positioniert werden, dass die Kanten jeweils einen I-Stoß bilden und die Halbschalen entlang der Kanten miteinander, insbesondere unter Verwendung eines Laserstrahls, verschweißt werden.

Zunehmend werden in Kraftfahrzeugen geschlossene Hohlprofile eingesetzt, welche speziell an den Anwendungsfall angepasste Querschnitte und Materialdicken aufweisen. Bisher werden geschlossene Hohlprofile in der Regel dadurch hergestellt, dass zunächst ein Rohr geformt wird, das Rohr entsprechenden Biegungen oder Vorverformungen unterzogen wird und anschließend ein Hydroumformen des vorgebogenen oder vorverformten zur endgültigen Form des geschlossenen Hohlprofils erfolgt. Einerseits sind auf diese Weise nicht alle Bauteile herstellbar, da beim Hydroumformen lokale Dehnungen des Materials überschritten werden und es somit zur Rissbildung kommen kann. Zusätzlich kann es zu einer nicht beherrschbaren Faltenbildung während des Hydroumformens kommen. Andererseits sind die bisher verwendeten Verfahrensschritte zur Herstellung eines anwendungsangepassten, geschlossenen Hohlprofils sehr aufwändig und damit kostenintensiv. Zwar kann ein geschlossenes Hohlprofil prinzipiell auch aus zwei tiefgezogenen Halbschalen hergestellt werden, allerdings werden beim Tiefziehen einer Platine Spannungen in die Platine eingebracht, welche zu einer Rückfederung der Platine führen. Das Rückfedern der Halbschalen erschwert jedoch die genaue Positionierung der Halbschalen in einem Gesenk zum Verschweißen. Ein Verschweißen der Kanten der Halbschalen in einem I-Stoß war aufgrund der Rückfederung der Halbschalen bisher nicht ohne großen Aufwand möglich. Aus diesem Grund sind bisher geschlossene Hohlprofile, welche aus verschweißten Halbschalen bestehen, üblicherweise an den abstehenden Flanschbereichen verschweißt worden. Diese geschlossenen Hohlprofile können aber aufgrund der abstehenden Schweißnaht nicht so eingesetzt werden wie geschlossene Hohlprofile, die aus einem geschweißten Rohr hergestellt werden und keine abstehende Schweißnaht aufweisen. Außerdem erhöhen die Flansche das Gesamtgewicht des Bauteils nicht unerheblich.

Ein Verfahren zur Herstellung von Halbschalen ist aus der veröffentlichen japanischen Patentanmeldung JP 08/168830 bekannt, bei welchem eine Platine zunächst in einem Gesenk tiefgezogen wird, so dass abstehende Flanschbereiche entstehen. Die Flanschbereiche werden anschließend über einen Schneid- und Stauchstempel gleichzeitig gestaucht und abgeschert. Die so erhaltenen Halbschalen weisen aber aufgrund der Geometrie des Schneidstauchstempels Unregelmäßigkeiten an den Kanten der Halbschalen auf, so dass diese zum Verschweißen in einem I-Stoß nicht geeignet sind. Das bekannte Schneidstauchen führt darüber hinaus nicht zu ausreichend spannungsarmen Halbschalen, die zum Verschweißen miteinander in einem I-Stoß geeignet sind.

Hiervon ausgehend liegt der vorliegenden Erfindung die Aufgabe zugrunde, ein Verfahren und eine Vorrichtung zur Herstellung von rückfederungsarmen Halbschalen aus Metall, insbesondere Stahl oder einer Stahllegierung, anzugeben, mit welchem bzw. mit welcher rückfederungsarme und für das Verschweißen im I-Stoß geeignete Kantenbereiche aufweisende Halbschalen herstellbar sind. Darüber hinaus liegt der vorliegenden Erfindung die Aufgabe zugrunde, aus erfindungsgemäßen Halbschalen hergestellte geschlossene Hohlprofile sowie ein entsprechendes Herstellverfahren für geschlossene Hohlprofile vorzuschlagen.

Gemäß einer ersten Lehre der vorliegenden Erfindung wird die oben aufgezeigte Aufgabe für ein gattungsgemäßes Verfahren zur Herstellung von rückfederungsarmen Halbschalen aus einem Metall dadurch gelöst, dass die Flanschbereiche durch Anstauchen einer Ecke im Wesentlichen senkrecht zur Wand der Zarge der tiefgezogenen Platine ausgeformt werden und die Flanschbereiche anschließend in einem Schergesenk beschnitten werden, so dass randlose Halbschalen entstehen.

Durch das erfindungsgemäße Anstauchen einer Ecke in die Flanschbereiche, so dass diese im Wesentlichen senkrecht zur Wand der Zarge der tiefgezogenen Platine ausgeformt werden, werden einerseits die beim Tiefziehen eingebrachten Spannungen in die Platine zunächst teilweise egalisiert. Die resultierende Halbschale ist lateral zur Zargenwand rückfederungsarm. Andererseits weist nach einem Beschneiden der Flanschbereiche die Fläche der Kanten der Halbschalen eine beim Anstauchen exakt definierte Form auf, welche durch das Stauchwerkzeug zur Ausformung der Ecken der Flanschbereiche vorgegeben wird. Dies resultiert daraus, dass die Schnittebene beim nachfolgenden Abscheren senkrecht zur Kantenfläche verlaufen kann. Die resultierenden Halbschalen sind daher nicht nur rückfederungsarm, sondern weisen auch die für ein Verschweißen im I-Stoß gewünschte genau definierte geometrische Kantenform in axialer Richtung auf. Üblicherweise werden die Kanten der Halbschalen zur Erzielung einer guten Verschweißbarkeit im I-Stoß plan als Plateau ausgeformt. Es ist aber auch denkbar den Kanten der Halbschalen zusätzlich ein anderes, beliebiges Querschnittprofil beim Anstauchen einzuprägen.

Die Rückfederungseigenschaften der Halbschalen werden dadurch weiterverbessert, dass während und/oder nach dem Beschneiden der Flanschbereiche die Zarge und/oder die Kanten der beschnittenen Halbschalen zusätzlich gestaucht werden. Durch dieses zusätzliche Stauchen werden eventuell vorhandene Rückfederungskräfte weiter reduziert.

Erfolgt, gemäß einer nächsten weiteren Ausführungsform des erfindungsgemäßen Verfahrens, das Tiefziehen der Platine und das Ausformen der Flanschbereiche in einem Arbeitsschritt im Ziehgesenk, wobei das Ausformen der Flanschbereiche durch einen Niederhalter erfolgt, kann die Anzahl der Arbeitsschritte auf ein Minimum reduziert werden. Beispielsweise kann in diesem Fall mit einem einzigen Niederhalter und einem einzigen Tiefziehstempel ein Tiefziehen und eine entsprechende Ausformung der Flanschbereiche senkrecht zur Wand des tiefgezogenen Bereichs der Platine erfolgen. Es ist aber auch denkbar, die Ausformungen der Flanschbereiche durch einen weiteren Ziehstempel durchzuführen, so dass die einzelnen Elemente des Ziehgesenkes, beispielsweise der Niederhalter, einfacher ausgeführt werden können.

Vorzugsweise wird beim Tiefziehen der Platine im Ziehgesenk ein Stauchanteil berücksichtigt, so dass die tatsächliche Tiefe der Zarge nach dem Tiefziehen größer als benötigt ist. Der vorgesehene Stauchanteil wird verwendet, um die beim Tiefziehen in die Bereiche eingebrachten Spannungen durch Stauchen wieder zurückzuführen und die tiefgezogene Zarge dennoch auf Maß zu bringen.

Aus dem gleichen Grund wird, gemäß einer nächsten weitergebildeten Ausführungsform des erfindungsgemäßen Verfahrens, in die Flanschbereiche vor dem Beschneiden eine Gegenkrümmung eingebracht. Insbesondere wird dadurch einem beim Tiefziehen in die Wand der Zarge und die Flanschbereiche eingebrachten Rückfederungsmoment zusätzlich entgegengewirkt.

Vorzugsweise erfolgt das Beschneiden der Flanschbereiche durch Stanzen oder alternativ unter Verwendung eines Laserstrahls. Eine Stanze führt zu einem reduzierten apparativen Aufwand. Die Verwendung eines Laserstrahls verhindert dagegen, dass durch das Beschneiden der Flanschbereiche zusätzliche Spannungen und damit Rückfederungsmomente in die Halbschalen eingebracht werden.

Gemäß einer zweiten Lehre der vorliegenden Erfindung wird die oben hergeleitete Aufgabe durch ein gattungsgemäßes Verfahren zur Herstellung geschlossener Hohlprofile dadurch gelöst, dass mindestens zwei erfindungsgemäß hergestellte Halbschalen verwendet werden.

Beim Tiefziehen der Halbschalen ergibt sich ein größerer Freiheitsgrad für Querschnittsänderungen als beim üblicherweise verwendeten Hydroumformen. Die unterschiedlichen Querschnittsgeometrien werden durch ein entsprechend ausgebildetes Ziehgesenk bestimmt. Insofern ist das genannte Verfahren insbesondere vorteilhaft zur Herstellung von "modular Tubes", welche in Längsrichtung veränderliche Querschnittsformen aufweisen. Aufgrund der Rückfederungsarmut, insbesondere lateral zur Zargenwand, der erfindungsgemäß hergestellten Halbschalen können diese ohne weiteres so positioniert werden, dass die Kanten jeweils einen exakten I-Stoß bilden, da die Halbschalen aufgrund der Rückfederungsarmut eine sehr hohe Maßgenauigkeit aufweisen. Vorzugsweise wird ein Laserstrahl zum Verschweißen der Kanten verwendet. Allerdings ist auch denkbar konventionelle Schweißverfahren einzusetzen.

Im Hinblick auf eine wirtschaftliche Herstellung von geschlossenen Hohlprofilen kann das erfindungsgemäße Verfahren dadurch weiter verbessert werden, dass mindestens zwei Schergesenke zur Herstellung der Halbschalen verwendet werden, die Halbschalen anschließend in zwei Konturgesenke eingelegt werden und die Positionierung der beiden Halbschalen gegeneinander durch einen Formschluss der beiden Konturgesenke miteinander unter Verwendung einer geeigneten Vorrichtung erfolgt. Mit Hilfe zweier einfacher Konturgesenke, welche lediglich für eine Aufnahme der Halbschalen in einer exakt definierten Position ausgebildet sind, können die rückfederungsarmen Halbschalen so exakt gegeneinander auf einfache Weise positioniert werden, so dass diese einen gut verschweißbaren I-Stoß bilden. Über den Formschluss der beiden Konturgesenke miteinander wird erreicht, dass die Positionierung reproduzierbar gelingt, so dass die Prozesssicherheit beim Verschweißen gesteigert werden kann. Allerdings können neben einem Formschluss alternativ auch andere Verfahren zur exakten Positionierung der die Halbschalen aufnehmenden Gesenke verwendet werden. Die Konturgesenke können darüber hinaus durch noch einfachere Positioniermittel, beispielsweise Positionierstifte ersetzt werden, sofern die Halbschalen lateral zur Zargenwand nahezu rückfederungsfrei hergestellt werden können.

Gemäß einer weiteren Ausführungsform des erfindungsgemäßen Verfahrens zur Herstellung von geschlossenen Hohlprofilen wird vor dem Verschweißen der Halbschalen ein elastischer Schlauch zwischen die positionierten Halbschalen eingelegt, welcher über ein Druckmedium mit Druck beaufschlagt wird und beim Verschweißen zwischen den Halbschalen verbleibt. Eventuell dennoch vorhandenen Rückfederungskräften wird durch den Einsatz des elastischen Schlauchs entgegengewirkt, so dass beispielsweise in Verbindung mit den verwendeten Konturgesenken, in welchen die Halbschalen zum Verschweißen positioniert sind, die Positionsgenauigkeit der Kanten gegeneinander noch einmal verbessert werden kann. Als Druckmedien im Schlauch sind sowohl flüssige als auch gasförmige Medien geeignet.

Vorzugsweise ist der elastische Schlauch, insbesondere im Bereich der Schweißnähte, temperaturgeschützt. Beispielsweise kann ein im Bereich der Schweißnähte angeordnetes Keramikband den elastischen Schlauch vor der Temperatureinwirkung der Schweißstrahlen schützen. Es ist aber auch denkbar, den elastischen Schlauch direkt mit einem entsprechenden Temperaturschutz auszuführen.

Die nach dem Verfahren gemäß der Erfindung hergestellten, geschlossenen Hohlprofile lassen sich nicht nur auf besonders wirtschaftliche Weise herstellen, sondern weisen auch eine hohe Flexibilität hinsichtlich ihrer Formgebung auf, so dass sie beispielsweise im Bereich des Fahrzeugbaus Verwendung finden können. Daneben sind sie im Vergleich zu den bisher aus tiefgezogenen Halbschalen hergestellten und Flansche aufweisenden geschlossenen Hohlprofilen deutlich spannungsärmer, da rückfederungsarme Halbschalen zur Herstellung verwendet werden.

Wie bereits zuvor ausgeführt, können durch die nach dem erfindungsgemäßen Verfahren hergestellten Halbschalen besonders leicht über entsprechende Stempelgeometrien des Ziehgesenks hergestellt werden, so dass das geschlossene Hohlprofil vorzugsweise ein "modular Tube" ist. Schließlich wird gemäß einer vierten Lehre der vorliegenden Erfindung die oben hergeleitete Aufgabe für eine Vorrichtung zur Herstellung von Halbschalen eines geschlossenen Hohlprofils dadurch gelöst, dass ein Ziehgesenk und ein Schergesenk vorgesehen sind, wobei das Ziehgesenk mindestens einen ersten Stempel und einen ersten Niederhalter zum Ziehen der Platine sowie zur Erzeugung eines Flanschbereiches aufweist und mindestens ein weiterer Stempel und ein weiterer Niederhalter zur Anstauchung einer Ecke in und zur Ausformung der Flanschbereiche der Platine im Wesentlichen senkrecht zur Wand der Zarge der tiefgezogenen der Platine vorgesehen ist.

Wie zuvor geschildert, können mit der erfindungsgemäßen Vorrichtung Halbschalen hergestellt werden, welche einerseits rückfederungsarm sind und eine genau definierte Fläche an den axialen Kanten der Halbschalen aufweisen. Die erfindungsgemäße Vorrichtung ist daher geeignet, flanschlose Halbschalen zur Herstellung von geschlossenen Hohlprofilen auf einfache Weise herzustellen.

Ist ein erster Niederhalter des Ziehgesenks vorgesehen, mit welchem eine Ecke in die Flanschbereiche der Platine angestaucht und die Flanschbereiche im Wesentlichen senkrecht zur Wand der Zarge der tiefgezogenen Platine ausgeformt werden können, ist es möglich, mit der erfindungsgemäßen Vorrichtung in einem zweistufigen Prozess erfindungsgemäße Halbschalen herzustellen, da kein zusätzlicher Stempel zum Anstauchen und Ausformen der Flanschbereiche verwendet werden muss.

Weist das Schergesenk der Vorrichtung einen Scherstempel zum Abscheren der ausgeformten Flanschbereiche und einen Stauchstempel zum Anstauchen der Zarge und/oder der Kanten der Halbschale auf, kann ein besonders einfacher Scherstempel und ein besonders einfacher Stauchstempel zur Durchführung der Scher- und Stauchoperationen verwendet werden.

Ist der Scherstempel des Schergesenks gleichzeitig als Stauchstempel für die Zarge und/oder die Kanten der Halbschale ausgebildet, können beispielsweise Gegenkrümmungen in den Flanschbereich während des Abscherens eingebracht werden, welche das Abscheren und das Anstauchen der Kante beim Beschneiden der Halbschale prozesssicherer machen. Zusätzlich werden durch die Gegenkrümmung Rückfederungsmomente in der Zarge, welche durch den Tiefziehvorgang verursacht wurden, verringert.

Die Wirtschaftlichkeit im Hinblick auf die Herstellung von geschlossenen Hohlprofilen kann mit einer erfindungsgemäßen Vorrichtung dadurch weiter verbessert werden, dass zwei Ziehgesenke, zwei Schergesenke und zwei Konturgesenke vorgesehen sind. Mit einer entsprechenden Vorrichtung können parallel die Platinen gezogen, entsprechend abgeschert und miteinander verschweißt werden.

Es gibt nun eine Vielzahl von Möglichkeiten das erfindungsgemäße Verfahren und Vorrichtung zur Herstellung von Halbschalen aus Metall sowie das erfindungsgemäße Verfahren zur Herstellung von geschlossenen Hohlprofilen weiterzugestalten und auszubilden. Hierzu wird verwiesen einerseits auf die den Patentansprüchen 1, 7 und 11 nachgeordneten Patentansprüche, andererseits auf die Beschreibung von vier Ausführungsbeispielen in Verbindung mit der Zeichnung. Die Zeichnung zeigt in
- Fig. 1: in einer schematischen Schnittansicht der Zieh- bzw. der Schergesenke während der Durchführung eines Ausführungsbeispiels des erfindungsgemäßen Verfahrens zur Herstellung von rückfederungsarmen Halbschalen,
- Fig. 2: in einer schematischen Schnittansicht ein alternatives Schergesenk während der Durchführung des Ausführungsbeispiels aus Fig. 1,
- Fig. 3: in einer schematischen Schnittansicht die Zieh- und Schergesenke während der Durchführung eines dritten Ausführungsbeispiels des erfindungsgemäßen Verfahren zur Herstellung von rückfederungsarmen Halbschalen und
- Fig. 4: eine axiale Schnittansicht sowie eine Draufsicht eines vierten Ausführungsbeispiels eines nach dem Verfahren gemäß der Erfindung hergestellten, geschlossenen Hohlprofils.

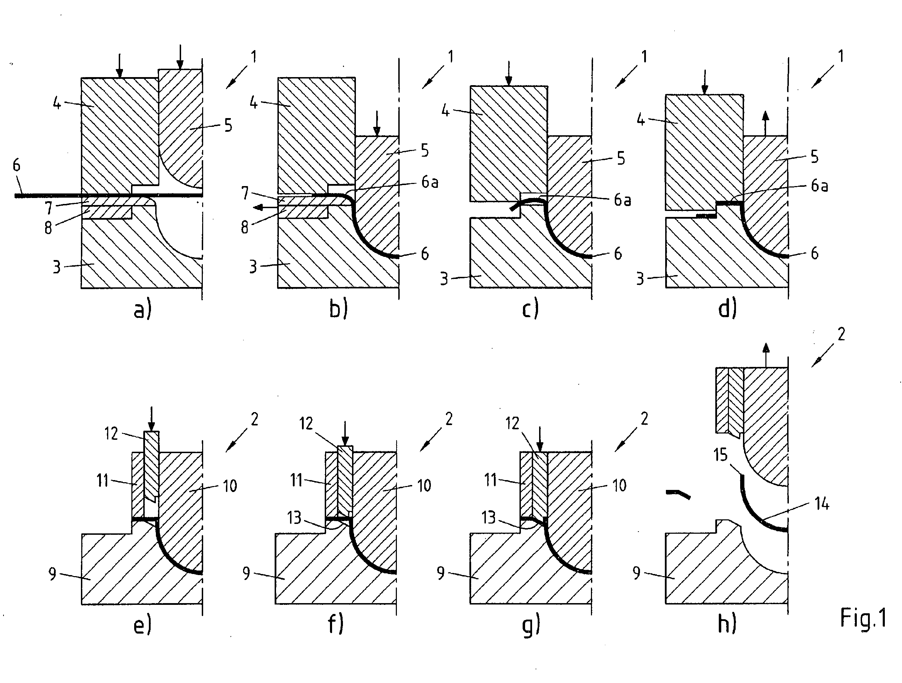

Die Fig. 1a) bis h) zeigt schematisch in einer radialen Schnittansicht eine Hälfte eines Ziehgesenks 1 und eines Schergesenks 2 zu verschiedenen Zeitpunkten während der Durchführung eines Ausführungsbeispiels des erfindungsgemäßen Verfahrens. Das Ziehgesenk 1 umfasst eine Matrize 3, einen Niederhalter 4 sowie einen Stempel 5 zum Ziehen der Platine 6. Die Platine 6 wird zunächst in das Ziehgesenk 1 eingelegt und über den Niederhalter 4 und Distanzstücke 7, 8 fixiert, wie Fig. 1a) zeigt. In Fig. 1b) ist nun dargestellt, wie der Stempel 5 die Platine 6 zieht, wobei entsprechende Flanschbereiche 6a entstehen. Der Stempel 5 hat dabei eine Ausdehnung in Längsrichtung, um eine Halbschale für ein Hohlprofil beispielsweise mit in Längsrichtung veränderlicher Querschnittsform herzustellen. In dem in Fig. 1c) dargestellten Arbeitsschritt wird der Niederhalter 4, nachdem die Distanzstücke 7, 8 aus dem Ziehgesenk entfernt wurden, weiter abgesenkt, so dass einerseits der Flanschbereich 6a über eine am Niederhalter 4 vorhandene Schneidkante beschnitten wird. Andererseits wird durch die weitere Bewegung des Niederhalters 4 in den Flanschbereich 6a durch Anstauchen eine Ecke ausgeformt. Die Ausformung der Ecke in den Flanschbereich 6a gewährleistet, dass die Fläche der Kante der Halbschale entsprechend der Form des Niederhalters 4 ausgeformt wird und eine genau definierte Kontur erhält. Im vorliegenden Ausführungsbeispiel wird die Fläche der axial verlaufenden Kante der Halbschale in eine plane Form senkrecht zur Wand der Zarge der tiefgezogenen Platine durch den Niederhalter 4 gebracht. Gleichzeitig werden durch das Anstauchen der Wände der Zarge der tiefgezogenen Platine die in die Platine beim Tiefziehen eingebrachten Spannungen egalisiert, so dass nahezu keine Rückstellmomente in der tiefgezogenen Halbschale vorhanden sind. Durch das erfindungsgemäße Anstauchen können daher rückfederungsarme Halbschalen hergestellt werden. Die Fig. 1d) zeigt das Ausführungsbeispiel des erfindungsgemäßen Verfahrens am Ende der Arbeitsschritte im Ziehgesenk nach dem Anstauchen des Flanschbereiches 6a. In dieser Position kann nun der Niederhalter 4 und der Stempel 5 gezogen werden und die Platine 6 mit einem im Wesentlichen senkrecht zur Wand ausgeformten Flanschbereich 6a aus dem Ziehgesenk entnommen werden.

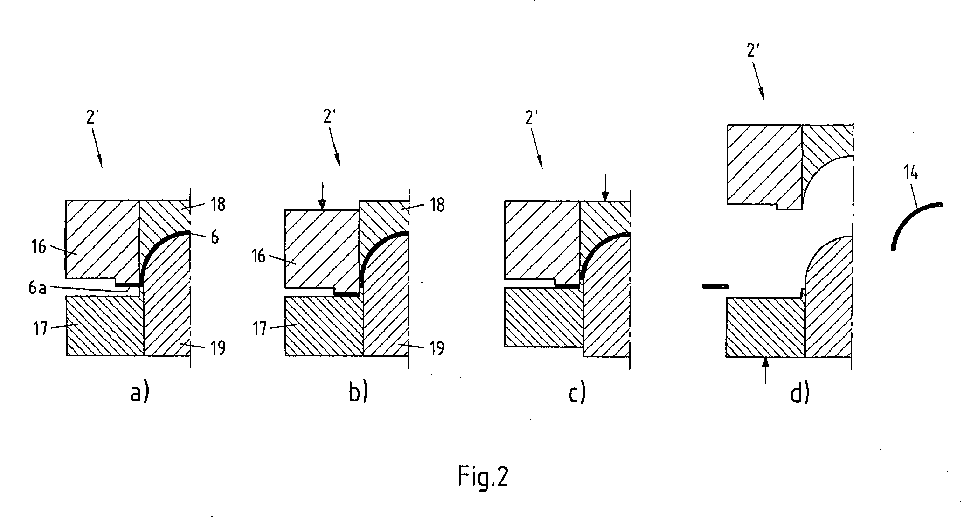

In den Fig. 1e) bis 1h) ist der weitere Verlauf des ersten Ausführungsbeispiels des erfindungsgemäßen Verfahrens in einem Schergesenk 2 dargestellt. Das Schergesenk 2 umfasst eine Matrize 9, zwei Niederhalter 10, 11 sowie einen Stauch-Schneidstempel 12. Nach dem Einlegen der Platine in das Schergesenk 2 wird die Platine durch die Niederhalter 10, 11 in ihrer Position fixiert, wie Fig. 1e) zeigt. Die Matrize 9 umfasst einen an den Schneid-Stauchstempel 12 angepassten Hohlraum 13, in welchen der Flanschbereich 6a während des Beschneidens der tiefgezogenen Platine eingeformt wird. Dabei formt der Schneid-Stauchstempel 12 eine Gegenkrümmung in den Flanschbereich 6a ein, welche entgegengesetzt zur Krümmung des Flanschbereichs nach dem Tiefziehen gerichtet ist. Diese dient einerseits dazu, das Abtrennen des Flanschbereiches zu erleichtern. Andererseits wird durch die Gegenkrümmung des Flanschbereiches und durch den Stauchvorgang des SchneidStauchstempels 12 ein weiterer Spannungsabbau in der beschnittenen Halbschale erreicht. Nachdem, wie Fig. 2g) zeigt, der Schneid- und Stauchstempel 12 den Flanschbereich in den Formhohlraum 13 verformt hat, kann das Schergesenk geöffnet werden und entsprechend der Fig. 1h) eine randlose Halbschale 14 entnommen werden. Die randlose Halbschale 14 weist aufgrund der zusätzlichen Stauchschritte nahezu keine Rückfederungskräfte auf, welche üblicherweise über das Tiefziehen in tiefgezogene Teile eingebracht werden. Aufgrund der genau definierten Geometrie der Fläche der Kante 15 der Halbschale ist diese ideal geeignet, um mit einer passenden anderen Halbschale zu einem geschlossenen Hohlprofil verschweißt zu werden. Eine alternative Ausführungsform des Schergesenks zeigt die Fig. 2a) bis 2d) in einer radialen Schnittansicht schematisch während der Durchführung eines weiteren Ausführungsbeispiels des erfindungsgemäßen Verfahrens. Das Schergesenk 2' weist eine Matrize 18, einen Schneidstempel 16 sowie einen Niederhalter 17 auf. Der Schneidstempel 16 schneidet in Verbindung mit dem Niederhalter 17 den als Ecke senkrecht abstehend ausgeformten Flanschbereich 6a der tiefgezogenen Platine ab, wie Fig. 2a) und 2b) zeigen. Nach dem Beschneiden des Flanschbereiches 6a wird durch eine Relativbewegung der Matrize 18 und des Stempels 19 gegeneinander in Verbindung mit dem Niederhalter 17 die Wand der Zarge der tiefgezogenen Platine 6 zusätzlich gestaucht, Fig. 2c). Anschließend kann, gemäß Fig. 2d), das Schergesenk 2' geöffnet werden und die Halbschale 14 entfernt werden. Im Gegensatz zu dem in den Fig. 1e) bis 1h) gezeigten Schergesenk erfolgt das Stauchen der Wand der tiefgezogenen Platine 6 und das Abscheren des Flanschbereiches 6a von der tiefgezogenen Platine 6 getrennt voneinander ab, so dass hinsichtlich der Prozessparameter beim Abscheren und Stauchen eine zusätzliche Flexibilität erzielt wird.

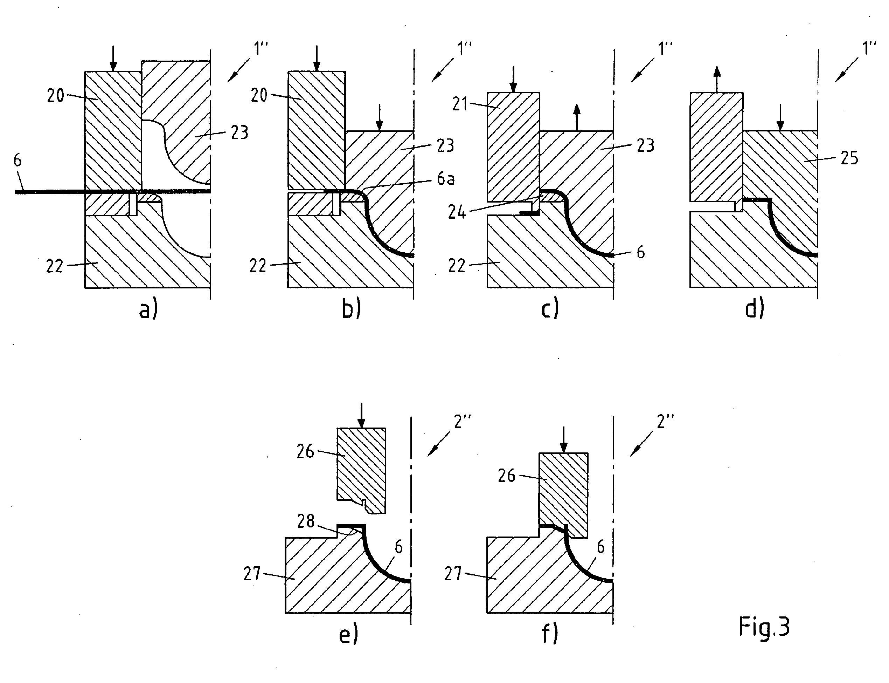

Fig. 3a) bis f) zeigt das Ziehgesenk 1" und das Schergesenk 2" in einer schematischen Schnittansicht während der Durchführung eines dritten Ausführungsbeispiels des erfindungsgemäßen Verfahrens. Bei dem dritten Ausführungsbeispiel des erfindungsgemäßen Verfahrens wird die Platine 6 in einem dreistufigen Verfahren tiefgezogen und beschnitten. Im Gegensatz zu dem ersten Ausführungsbeispiel des erfindungsgemäßen Verfahrens, in welchem das Tiefziehen und Anstauchen der Flanschbereiche senkrecht zur Wand des tiefgezogenen Bereichs der Platine in einem Arbeitsschritt erfolgt, werden in dem in Fig. 3 dargestellten dritten Ausführungsbeispiel zwei Arbeitsschritte benötigt. Der einfach gehaltene Niederhalter 20 des Ziehgesenks 1" dient, wie aus den Fig. 2a) und 2b) ersichtlich ist, lediglich zum Halten der Platine 6 während des Tiefziehvorgangs. Nach dem Tiefziehen der Platine 6 durch den Ziehstempel 23, welcher in die Matrize 22 eintaucht, wird der Niederhalter 20 entfernt. Ein Schneidstempel 21 beschneidet anschließend den Randbereich der Flanschbereiche 6a der tiefgezogenen Platine, während der Tiefziehstempel 23 als Niederhalter fungiert. Anschließend wird der Tiefziehstempel 23 sowie ein Distanzstück 24 entfernt, welches zuvor zur Ausbildung eines gebogenen Flanschbereiches 6a der Platine verwendet wurde. Der gebogene Flanschbereich 6a ermöglicht ein besonders gutes Fließen des Materials der Platine, so dass das Umformverhalten der Platine 6 verbessert wird. Nach dem Ziehen des Distanzstückes 24 und Einfahren eines zusätzlichen Stauchstempels 25 wird der Flanschbereich 6a als Ecke senkrecht zur Wand der Zarge der tiefgezogenen Platine angestaucht und in einem Schergesenk 2" über einen Schneid- und Stauchstempel 26 beschnitten. Die Matrize 27 umfasst, wie auch das Ziehgesenk 2, welches beim ersten Ausführungsbeispiel des erfindungsgemäßen Verfahrens verwendet wird, einen Formhohlraum 28, welcher zur Einbringung einer Gegenbiegung während des Stauchschneides dient.

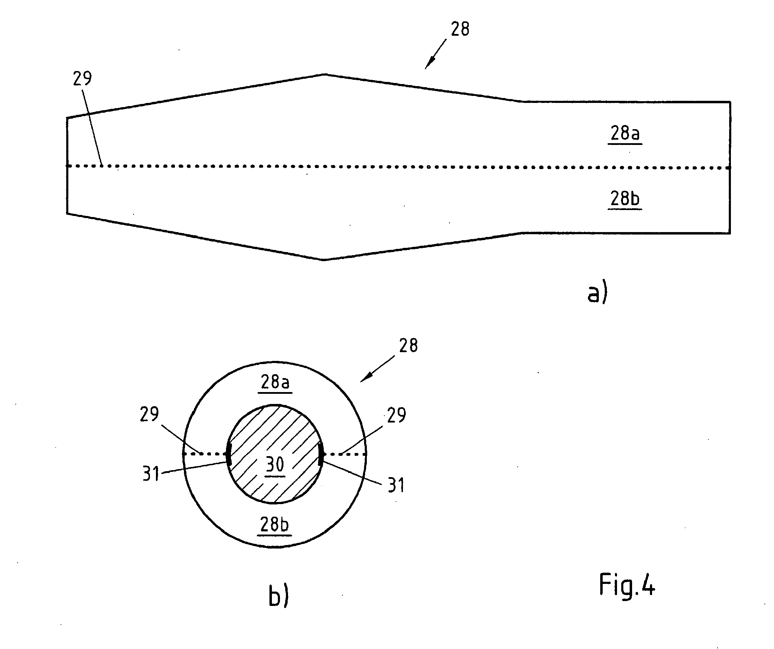

In der Fig. 4a) ist nun als ein viertes Ausführungsbeispiel der Erfindung ein erfindungsgemäß hergestelltes, aus rückfederungsarmen Halbschalen bestehendes, geschlossenes Hohlprofil schematisch in einer axialen Schnittansicht dargestellt. Die Fig. 4b) zeigt das gleiche geschlossene Hohlprofil 28 in einer Draufsicht. Das Hohlprofil 28 besteht aus zwei nach dem erfindungsgemäßen Verfahren hergestellten Halbschalen 28a und 28b, welche über eine Schweißnaht 29 miteinander verbunden sind. Vorzugsweise erfolgt das Verschweißen der Hohlprofile in nicht dargestellten Konturgesenken, welche zu diesem Zwecke gegeneinander so positioniert werden, dass die Kanten der Halbschalen 28a und 28b einen I-Stoß bilden. Die Schweißnaht 29 kann vorzugsweise unter Verwendung eines Laserstrahls hergestellt werden, wobei eine besonders genaue Positionierung des I-Stoßes erforderlich ist. Wie bereits zuvor beschrieben, ist es bei besonders rückfederungsarmen Halbschalen 28a, 28b möglich, lediglich einfache, ebenfalls nicht dargestellte Positionierstifte als Positioniermittel für die Positionierung der Halbschalen zu verwenden. Ferner sind auch alternative Schweißverfahren zum Verschweißen der Halbschalen 28a und 28b miteinander denkbar.

In Fig. 4b) ist in der Draufsicht des geschlossenen Hohlprofils 28 zusätzlich der zur Eliminierung eventuell vorhandener Rückstellkräfte in das Hohlprofil eingebrachte elastische Schlauch 30 dargestellt, welcher mit einem Druckmedium beaufschlagt wird, um nach innen gerichtete Rückstellmomente auszugleichen. Nach außen werden Rückstellkräfte beim Verschweißen beispielsweise durch das zur Positionierung verwendete Konturgesenk aufgenommen. Die Bereiche der Schweißnaht sind bei dem elastischen Schlauch temperaturgeschützt ausgebildet und weisen beispielsweise ein Keramikband 31 auf. Der Einfachheit halber nicht dargestellt sind in Fig. 4b) die Gesenke, in welchen die Halbschalen zum Verschweißen positioniert werden.

## Patentansprüche

1. Verfahren zur Herstellung von rückfederungsarmen Halbschalen aus einem Metall, insbesondere Stahl oder einer Stahllegierung, bei welchem Platinen (6) in mindestens einem Ziehgesenk (1,1") gezogen werden, so dass die Platinen (6) nach dem Tiefziehen an der tiefgezogenen Zarge Flanschbereiche (6a) aufweisen,
**dadurch gekennzeichnet, dass** die Flanschbereiche (6a) durch Anstauchen einer Ecke im Wesentlichen senkrecht zur Wand der Zarge der tiefgezogenen Platine (6) ausgeformt werden und die Flanschbereiche (6a) anschließend in einem Schergesenk (2,2',2") beschnitten werden, so dass randlose Halbschalen entstehen.

2. Verfahren nach Anspruch 1,
**dadurch gekennzeichnet, dass** während und/oder nach dem Beschneiden der Flanschbereiche (6a) die Zarge und/oder die Kanten der beschnittenen Halbschalen (14) zusätzlich gestaucht werden.

3. Verfahren nach Anspruch 1 oder 2,
**dadurch gekennzeichnet, dass** das Tiefziehen der Platine (6) und das Ausformen der Flanschbereiche (6a) in einem Arbeitsschritt im Ziehgesenk (1) erfolgt, wobei das Ausformen der Flanschbereiche (6a) durch einen Niederhalter (4) durchgeführt wird.

4. Verfahren nach einem der Ansprüche 1 bis 3,
**dadurch gekennzeichnet, dass** beim Tiefziehen der Platine (6) im Ziehgesenk (1) ein Stauchanteil berücksichtigt wird.

5. Verfahren nach einem der Ansprüche 1 bis 4,
**dadurch gekennzeichnet, dass** in die Flanschbereiche (6a) vor dem Beschneiden eine Gegenkrümmung eingebracht wird.

6. Verfahren nach einem der Ansprüche 1 bis 5,
**dadurch gekennzeichnet, dass** das Beschneiden der Flanschbereiche (6a) durch Stanzen oder unter Verwendung eines Laserstrahls erfolgt.

7. Verfahren zur Herstellung geschlossener Hohlprofile (28), insbesondere "modular Tubes", wobei mindestens zwei Halbschalen (28a,28b) so positioniert werden, dass die Kanten jeweils einen I-Stoß bilden und die Halbschalen entlang der Kanten miteinander, insbesondere unter Verwendung eines Laserstrahls, verschweißt werden,
**dadurch gekennzeichnet, dass** die mindestens zwei Halbschalen (28a, 28b) nach dem Verfahren gemäß einem der Ansprüche 1 bis 6 hergestellt werden.

8. Verfahren nach Anspruch 7,
**dadurch gekennzeichnet, dass** mindestens zwei Schergesenke (2,2'2") zur Herstellung der Halbschalen (28a,28b) verwendet werden, die Halbschalen anschließend in zwei Konturgesenke eingelegt werden und die Positionierung der beiden Halbschalen (28a, 28b) gegeneinander durch einen Formschluss der beiden Konturgesenke miteinander unter Verwendung einer geeigneten Vorrichtung erfolgt.

9. Verfahren nach Anspruch 7 oder 8,
**dadurch gekennzeichnet, dass** vor dem Verschweißen der Halbschalen (28a,28b) ein elastischer Schlauch (30) zwischen die positionierten Halbschalen (28a,28b) eingelegt wird, welcher über ein Druckmedium mit Druck beaufschlagt wird und beim Verschweißen zwischen den Halbschalen verbleibt.

10. Verfahren nach einem der Ansprüche 7 bis 9,
**dadurch gekennzeichnet, dass** der elastische Schlauch (30), insbesondere im Bereich der Schweißnähte, Temperatur geschützt wird.

11. Vorrichtung zur Herstellung von Halbschalen eines geschlossenen Hohlprofils, insbesondere zur Durchführung eines Verfahrens nach Anspruch 1 bis 6,
**dadurch gekennzeichnet, dass** ein Ziehgesenk (1, 1") und ein Schergesenk (2, 2', 2") vorgesehen sind, wobei das Ziehgesenk (1, 1") mindestens einen ersten Stempel (4, 23) und einen ersten Niederhalter (4, 20) zum Ziehen der Platine (6) sowie zur Erzeugung eines Flanschbereiches (6a) aufweist und mindestens ein weiterer Stempel (25) zur Anstauchung einer Ecke in und zur Ausformung der Flanschbereiche (6a) der Platine (6) im Wesentlichen senkrecht zur Wand der Zarge der tiefgezogenen Platine (6) vorgesehen ist.

12. Vorrichtung nach Anspruch 11,
**dadurch gekennzeichnet, dass** ein erster Niederhalter (4) des Ziehgesenks (1) vorgesehen ist, mit welchem eine Ecke in die Flanschbereiche (6a) der Platine (6) angestaucht und die Flanschbereiche (6a) im Wesentlichen senkrecht zur Wand der Zarge der tiefgezogenen Platine (6) ausgeformt werden können.

13. Vorrichtung nach Anspruch 11 oder 12,
**dadurch gekennzeichnet, dass** das Schergesenk (2') einen Scherstempel (16) zum Abscheren der ausgeformten Flanschbereiche (6a) und einen Stauchstempel (18) zum Anstauchen der Kanten der Halbschale aufweist.

14. Vorrichtung nach einem der Ansprüche 11 bis 13,
**dadurch gekennzeichnet, dass** der Scherstempel (12, 26) des Schergesenks (2, 2") gleichzeitig als Stauchstempel für die Kanten der Halbschale ausgebildet ist.

15. Vorrichtung nach einem der Ansprüche 11 bis 14,
**dadurch gekennzeichnet, dass** zwei Ziehgesenke (1, 1"), zwei Schergesenke (2, 2', 2") und zwei Konturgesenke vorgesehen sind.

## Claims

1. Method for producing low-springback half shells made of a metal, in particular steel or a steel alloy, in which blanks (6) are drawn in at least one drawing die (1, 1"), such that the blanks (6) have flange regions (6a) on the deep drawn body after the deep drawing, **characterised in that** the flange regions (6a) are shaped by upsetting a corner substantially perpendicularly to the wall of the body of the deep drawn blank (6) and the flange regions (6a) are subsequently trimmed in a shearing die (2, 2', 2"), such that half shells without margins are produced.

2. Method according to Claim 1, **characterised in that** during and/or after the trimming of the flange regions (6a), the body and/or the edges of the trimmed half shells (14) are additionally upset.

3. Method according to Claim 1 or 2, **characterised** that the deep drawing of the blank (6) and the shaping of the flange regions (6a) takes place in a single operation in the drawing die (1), the shaping of the flange regions (6a) being carried out by a blank holder (4).

4. Method according to any one of Claims 1 to 3, **characterised in that** an upsetting component is taken into account in the deep drawing of the blank (6) in the drawing die (1).

5. Method according to any one of Claims 1 to 4, **characterised in that** a reverse curve is introduced into the flange regions (6a) prior to the trimming.

6. Method according to any one of Claims 1 to 5, **characterised in that** the flange regions (6a) are trimmed by punching or using a laser beam.

7. Method for producing closed hollow profiles (28), in particular modular tubes, at least two half shells (28a, 28b) being positioned in such a way that the edges each form a butt joint and the half shells are welded to one another along the edges, in particular using a laser beam, **characterised in that** the two half shells (28a, 28b) are produced according to the method according to any one of Claims 1 to 6.

8. Method according to Claim 7, **characterised in that** at least two shearing dies (2, 2', 2") are used to produce the half shells, the half shells (28a, 28b) are subsequently inserted into two contour dies and the two half shells (28a, 28b) are positioned relative to each other by a form fit of the two contour dies with each other using a suitable device.

9. Method according to Claim 7 or 8, **characterised in that** prior to the welding of the half shells (28a, 28b) there is inserted between the positioned half shells (28a, 28b) a resilient hose (30) which is subjected to pressure via a pressure medium and remains between the half shells during the welding.

10. Method according to any one of Claims 7 to 9, **characterised in that** the resilient hose (30) is thermally protected, in particular in the region of the weld seams.

11. Device for producing half shells of a closed hollow profile according to Claim 11 or 12, in particular for carrying out a method according to Claims 1 to 6, **characterised in that** a drawing die (1, 1'') and a shearing die (2, 2', 2") are provided, the drawing die (1, 1'') having at least a first upper swage (4, 23) and a first blank holder (4, 20) for drawing the blank (6) and also for producing a flange region (6a) and at least one further upper swage (25) is provided for upsetting a corner in and for shaping the flange regions (6a) of the blank (6) substantially perpendicularly to the wall of the body of the deep drawn blank (6).

12. Device according to Claim 11, **characterised in that** there is provided a first blank holder (4) of the drawing die (1) allowing a corner to be upset into the flange regions (6a) of the blank (6) and the flange regions (6a) to be shaped substantially perpendicularly to the wall of the body of the deep drawn blank (6).

13. Device according to Claim 11 or 12, **characterised in that** the shearing die (2') has an upper shearing swage (16) for shearing off the shaped flange regions (6a) and an upper upsetting swage (18) for upsetting the edges of the half shell.

14. Device according to any one of Claims 11 to 13, **characterised in that** the upper shearing swage (12, 26) of the shearing die (2, 2'') is at the same time configured as an upper upsetting swage for the edges of the half shell.

15. Device according to any one of Claims 11 to 14, **characterised in that** two drawing dies (1, 1''), two shearing dies (2, 2', 2'') and two contour dies are provided.

## Revendications

1. Procédé de fabrication de demi-coques de faible retour élastique constituées d'un métal, en particulier d'acier ou d'un alliage d'acier, dans lequel des flans (6) sont emboutis dans au moins une matrice d'emboutissage (1,1") de sorte que les flans (6) présentent, après emboutissage, des zones de brides (6a) sur l'ébauche emboutie
**caractérisé en ce que**
les zones de brides (6a) sont formées par refoulement d'un coin, sensiblement perpendiculaire à la paroi de l'ébauche du flan embouti (6) et **en ce que** les zones de brides (6a) sont ensuite découpées dans une matrice de cisaillement de manière à obtenir des demi-coques sans bords.

2. Procédé selon la revendication 1,
**caractérisé en ce que**,
pendant et/ou après la découpe des zones de brides (6a), l'ébauche et/ou les arêtes des demi-coques (14) découpées est/sont, en plus, refoulée(s).

3. Procédé selon la revendication 1 ou 2,
**caractérisé en ce que**
l'emboutissage du flan (6) et la formation des zones bridées (6a) s'effectuent en une seule étape de travail dans la matrice d'emboutissage (1), dans lequel le formage des zones de brides (6a) est réalisée par un serre-flan (4).

4. Procédé selon l'une quelconque des revendications 1 à 3,
**caractérisé en ce que**,
lors de l'emboutissage du flan (6) dans la matrice d'emboutissage (1), l'on tient compte d'une partie de refoulement.

5. Procédé selon l'une quelconque des revendications 1 à 4,
**caractérisé en ce que**,
l'on réalise, dans les zones de brides (6a), avant la découpe, une contre-courbure.

6. Procédé selon l'une quelconque des revendications 1 à 5, **caractérisé en ce que**
la découpe des zones de brides (6a) s'effectue par poinçage ou à l'aide d'un faisceau laser.

7. Procédé de fabrication de profilés creux (28) fermés, en particulier de "tubes modulaires", dans lequel au moins deux demi-coques (28a, 28b) sont positionnées de sorte que les arêtes forment respectivement une butée en I et que les demi-coques soient soudées le long des arêtes l'une à l'autre, en particulier en utilisant un faisceau laser,
**caractérisé en ce que**
les au moins deux demi-coques (28a, 28b) sont fabriquées selon le procédé de l'une quelconque des revendications 1 à 6.

8. Procédé selon la revendication 7,
**caractérisé en ce que**
au moins deux matrices de cisaillement (2, 2', 2") sont employées pour fabriquer les demi-coques (28a, 28b), **en ce que** les demi-coques sont ensuite insérées dans deux matrices de contour et **en ce que** le positionnement des deux demi-coques (28a, 28b) l'une contre l'autre s'effectue en établissant une liaison par forme entre les deux matrices de contour, en utilisant un dispositif approprié.

9. Procédé selon la revendication 7 ou 8,
**caractérisé en ce que**,
avant le soudage des demi-coques (28a, 2b?), l'on insère un tuyau flexible (30) entre les demi-coques (28a, 28b) positionnées, qui est alimenté en pression par un agent de pression et qui demeure, lors du soudage, entre les demi-coques.

10. Procédé selon l'une quelconque des revendications 7 à 9,
**caractérisé en ce que**
le tuyau flexible (30) est thermoprotégé, en particulier dans la zone des cordons de soudage,

11. Dispositif pour la fabrication de demi-coques d'un profilé creux fermé, en particulier pour mettre en oeuvre un procédé selon les revendications 1 à 6,
**caractérisé en ce que**
une matrice d'emboutissage (1, 1") et une matrice de cisaillement (2, 2', 2") sont prévues, dans lequel la matrice d'emboutissage (1, 1") présente au moins un premier poinçon (4, 23) et un premier serre-flanc (4, 20) pour emboutir le flan (6) et produire une zone de bride (6a) et **en ce qu'**au moins un autre poinçon (25) est prévu pour refouler un coin pendant et pour le formage des zones de brides (6a) du flan (6), sensiblement perpendiculaire à la paroi de l'ébauche du flan embouti (6).

12. Dispositif selon la revendication 11,
**caractérisé en ce que**
un premier serre-flanc (4) de la matrice d'emboutissage (1) est prévu, par lequel un coin est refoulé dans les zones de brides (6a) du flan (6) et **en ce que** les zones de brides (6a) peuvent être formées de manière sensiblement perpendiculaire à la paroi de l'ébauche du flan embouti (6).

13. Dispositif selon la revendication 11 ou 12,
**caractérisé en ce que**
la matrice de cisaillement (2') présente un poinçon de cisaillement (16) pour cisailler les zones de brides formées (6a) et un poinçon de refoulement (18) pour refouler les arêtes de la demi-coque.

14. Dispositif selon l'une quelconque des revendications 11 à 13,
**caractérisé en ce que**
le poinçon de cisaillement (12, 26) de la matrice de cisaillement (2, 2") se présente en même temps sous la forme d'un poinçon de refoulement pour les arêtes de la demi-coque.

15. Dispositif selon l'une quelconque des revendications 11 à 14,
**caractérisé en ce que**
deux matrices d'emboutissage (1, 1"), deux matrices de cisaillement (2, 2', 2'') et deux matrices de contour sont prévues.
